# FASCICULE DE BREVET EUROPEEN

(11) **EP 3 702 271 B1**
(45) Date de publication et mention de la délivrance du brevet: **20.07.2022**
(21) Numéro de dépôt: 20155277.5
(22) Date de dépôt: 04.02.2020
(51) Int. Cl.: B64C 25/24, B64C 25/00

(54) **ATTERRISSEUR MOTORISE ET AERONEF**
MOTORISIERTES FAHRWERK UND LUFTFAHRZEUG
MOTORISED LANDING GEAR AND AIRCRAFT

(30) Priorité: 28.02.2019 FR 1902108
(43) Date de publication de la demande: 02.09.2020
(73) Titulaire: Airbus Helicopters, 13725 Marignane Cedex (FR)
(72) Inventeur: BOULOUIS, Arnaud, 13100 AIX-LA-DURANNE (FR); PRUD'HOMME LACROIX, Pierre, 13127 VITROLLES (FR)
(74) Mandataire: GPI Brevets

(56) Documents cités:
- EP-A1- 2 977 316
- EP-A1- 3 241 744
- WO-A1-2018/228033
- CN-A- 106 697 275
- FR-A1- 2 951 697
- US-A1- 2012 080 559
- US-A1- 2015 267 769

## Description

La présente invention concerne un atterrisseur motorisé et un aéronef muni d'un tel atterrisseur.

Classiquement, un aéronef comporte un train d'atterrissage par l'intermédiaire duquel l'aéronef repose sur le sol. Le train d'atterrissage est parfois muni d'une pluralité d'atterrisseurs. Selon un exemple, le train d'atterrissage peut comporter deux atterrisseurs principaux et un atterrisseur auxiliaire, chacun pouvant être à balancier ou droit.

Un atterrisseur à balancier peut comprendre une jambe de train oscillante dénommée plus simplement « balancier ». La jambe de train porte au moins une roue. La jambe de train est articulée à une structure porteuse de l'aéronef et peut être ainsi escamotée en vol dans une case de train.

De plus, un atterrisseur à balancier connu comporte une contrefiche qui joue le rôle d'amortisseur et d'actionneur linéaire. La contrefiche est articulée à la jambe de train et à la structure porteuse. La contrefiche possède un vérin hydraulique d'entrée/sortie associé à un amortisseur oléopneumatique. Un tel amortisseur oléopneumatique produit de la raideur par la compression d'un gaz et de l'amortissement par laminage d'un liquide.

Lorsque l'aéronef touche le sol, la jambe de train effectue une rotation et sollicite la contrefiche.

Bien qu'efficace, un tel atterrisseur à balancier est dimensionné en fonction de divers critères à savoir par exemple des capacités maximales d'amortissement à atteindre dans certaines conditions et des performances minimales à atteindre en dehors de ces conditions, la capacité à générer une garde au sol de l'aéronef comprise entre une garde au sol minimale et une garde au sol maximale, un encombrement prédéterminé, une masse à minimiser, une raideur à atteindre dans le cadre du problème connu sous l'expression « résonance sol ».

Un constructeur réalise alors classiquement un atterrisseur à balancier en faisant des concessions pour certains des critères précédents afin de fournir un atterrisseur à balancier optimisé selon au moins un critère particulier.

En outre, un atterrisseur à balancier ne peut éventuellement pas être réglé en temps réel par exemple pour maitriser les facteurs de charge appliqués à l'aéronef en fonction de la masse de l'aéronef et/ou des conditions d'atterrissage ou pour maitriser le comportement dynamique de l'atterrisseur à balancier en fonction des températures extérieures. L'amortisseur oléopneumatique de la contrefiche peut éventuellement être réglé avant vol mais n'est pas réglable en vol. De même, la garde au sol d'un aéronef connu peut varier involontairement car cette garde au sol est dépendante notamment de la masse de l'aéronef, de la température extérieure et du profil du sol tel que sa pente.

Par ailleurs, un atterrisseur à balancier peut être équipé d'organes supplémentaires pour détecter quand l'aéronef touche le sol.

Un train d'atterrissage peut comprendre d'autres types d'atterrisseurs et par exemple un atterrisseur qualifié de « droit » ou encore un atterrisseur dit « à sonnette » ou « semi-articulé ». Ces atterrisseurs comprennent une jambe de train sensiblement verticale en position d'atterrissage, la jambe de train ayant un amortisseur. Ces atterrisseurs présentent donc une roue qui effectue au moins un mouvement de translation par rapport au fuselage lorsqu'elle touche le sol et éventuellement aussi un mouvement circulaire dans le cas de l'atterrisseur à sonnette, contrairement à un atterrisseur à balancier pour lequel la roue suit une trajectoire uniquement circulaire. A l'instar des atterrisseurs à balancier, ces atterrisseurs ne sont éventuellement pas réglables en temps réel.

Le document EP 2319760 décrit un atterrisseur motorisé muni de moyens de verrouillage et d'une jambe de train qui comprend un amortisseur, la jambe de train étant au sol pratiquement verticale.

Le document EP 2778047 est éloigné de la problématique en proposant un atterrisseur muni d'un amortisseur à courant de Foucault pour lutter contre le phénomène connu sous le terme anglais « shimmy ».

Le document EP 2494239 n'appartient pas au domaine technique de l'invention en ayant trait à une boîte de changement de vitesse. Le document EP 3045389 est aussi connu.

Le document FR 2951697 A1 et le document US2012080559 A1 présentent des jambes de train à mouvement rotatif.

Le document CN 106697275A est aussi connu.

Le document EP 3241744 A1_montre une jambe de train commandée hydrauliquement.

Le document EP 2977316A1 montre un système comprenant des ressorts à lames.

Le document US 2015267769 est aussi connu. US 2012/080559 divulgue un atterrisseur avec une bielle articulée entre la jambe de l'atterrisseur et un premier élément relié à un organe de sortie mobile d'un moteur.

La présente invention a alors pour objet de proposer un atterrisseur innovant et susceptible d'être adaptable lors son utilisation, à savoir par exemple avant un atterrissage, pendant un atterrissage, voire après un atterrissage quand l'aéronef est au sol.

Selon l'invention, un atterrisseur est muni d'une jambe de train mobile portant au moins un organe de contact avec le sol.

Un tel organe de contact peut inclure une roue ou tout autre organe et par exemple un ski.

Cet atterrisseur comporte un moteur ayant un organe de sortie mobile en rotation autour d'un axe moteur, ledit atterrisseur ayant un système de transformation d'un mouvement, ledit système de transformation d'un mouvement ayant un premier élément mobile coopérant avec un deuxième élément mobile, le premier élément étant relié mécaniquement à l'organe de sortie, le deuxième élément étant attaché à la jambe de train, ledit atterrisseur comprenant un calculateur en communication avec ledit moteur, ledit calculateur étant configuré pour contrôler ledit moteur afin de piloter une position de l'organe de contact avec le sol.

Selon un aspect, ledit deuxième élément peut comporter une bielle articulée par une première articulation au premier élément, ladite bielle étant articulée par une deuxième articulation à la jambe de train. Le terme « bielle » désigne dans ce cas un organe mécanique allongé éventuellement à longueur variable, tel qu'une bielle en tant que telle ou une tige par exemple.

Par exemple, le système de transformation d'un mouvement est configuré pour transformer un mouvement rotatif imprimé par le moteur en un mouvement au moins translatif de la jambe de train voire en un mouvement translatif et rotatif ou en un mouvement de translation circulaire.

La première articulation et/ou la deuxième articulation peuvent être du type liaison pivot en présentant uniquement un degré de liberté en rotation.

Dès lors, cet atterrisseur est muni d'une jambe de train et peut par exemple être un atterrisseur droit ou semi articulé. En outre, l'atterrisseur possède un moteur rotatif qui exerce un couple moteur tendant à faire tourner le premier élément d'un système de transformation d'un mouvement pour générer un mouvement du deuxième élément afin d'exercer un effort sur la jambe de train. Ce moteur peut avoir un comportement électromécanique et peut remplacer totalement ou partiellement un vérin et un amortisseur existants. Le moteur contrôlé par un calculateur permet de rendre paramétrable en temps réel le mouvement et la position de la jambe de train pour répondre aux problèmes précités.

Par exemple, le moteur peut exercer un couple moteur pour déplacer l'organe de contact avec le sol selon un premier sens de rotation d'une position train rentré éventuellement à atteindre en vol de croisière jusqu'à une position train sorti à atteindre avant un atterrissage, et inversement selon un deuxième sens par exemple suite à un décollage. Eventuellement le calculateur peut contrôler le moteur pour atteindre en vol de croisière une position train semi-rentré durant des missions particulières, et par exemple à basse altitude lorsque l'aéronef vole à une hauteur inférieure à un seuil.

Lors de l'atterrissage à savoir lorsque l'organe de contact avec le sol touche le sol, le sol exerce un effort sur l'organe de contact avec le sol. La jambe de train tend alors à se déplacer relativement à une structure porteuse de l'aéronef, par exemple en translation sur un train droit ou semi articulé. Le calculateur commande le moteur pour que le système de transformation d'un mouvement exerce un effort sur la jambe de train afin par exemple d'amortir la descente de la structure porteuse vers le sol et pour finalement atteindre une position d'équilibre. Par exemple, l'atterrisseur effectue au regard de la structure porteuse une translation vers cette structure porteuse durant une phase où le moteur tend à amortir la descente de l'aéronef vers le sol en induisant un effort sur la jambe de train inférieur à l'effort exercé par le sol. Cet effort induit par le moteur est ensuite augmenté pour que la jambe de train atteigne finalement une position d'équilibre, par exemple à la fin de la translation de la jambe de train vers la structure porteuse ou suite finalement à une translation supplémentaire vers le sol.

A cet effet, le calculateur est configuré pour commander ledit moteur en appliquant au moins une loi pour positionner la jambe de train dans une position d'équilibre adéquate. Une telle loi peut comporter au moins une composante ajustable en fonction de la au moins une information de déplacement de la jambe de train. Une telle information peut être relative à une position et/ou à une vitesse de déplacement de la jambe de train. Une composante dite de « dissipation » relative à la vitesse de déplacement représente une composante de dissipation d'énergie à l'atterrissage, habituellement assurée par le laminage d'un liquide. En outre, la loi peut permettre de déplacer au maximum la jambe de train à chaque atterrissage afin de réduire les efforts exercés sur la structure porteuse de l'aéronef reliée à l'atterrisseur. Pour permettre au calculateur d'adapter la commande du moteur aux conditions courantes, la loi peut comprendre divers paramètres ajustables en fonction par exemple :
- de la masse de l'aéronef, cette masse pouvant être calculée en vol à partir de la masse de l'aéronef au décollage et de la masse du carburant consommé,
- du centrage massique de l'aéronef, ce centrage pouvant également être calculé en vol à partir de sa position au décollage et de la masse de carburant consommée,
- des conditions d'atterrissage mesurables pendant le vol par des organes de mesure usuels, et par exemple de la vitesse de descente de l'aéronef, de la vitesse d'avancement de l'aéronef, de la portance de l'aéronef...

- de la température extérieure,
- d'une garde au sol à atteindre ou à ne pas dépasser.

Eventuellement, le calculateur peut contrôler le moteur pour que le moteur assure un maintien de la jambe de train en position via le système de transformation d'un mouvement et ainsi permette de s'affranchir du problème de résonance sol.

L'atterrisseur peut de plus comporter une ou plusieurs des caractéristiques qui suivent.

Selon un aspect, le calculateur peut être configuré pour contrôler ledit moteur en fonction au moins d'une information de déplacement de la jambe de train établie à partir d'un premier signal transmis par un premier capteur de l'atterrisseur, le premier capteur étant en communication avec le calculateur.

Dès lors, le premier capteur est un capteur qui mesure une information variant lorsque la jambe de train se déplace en translation et/ou en rotation. Le premier capteur émet un signal dit par commodité « premier signal » qui est porteur de manière directe ou indirecte d'une information de déplacement et par exemple de la vitesse de déplacement de la jambe de train et éventuellement fonction d'une valeur proportionnelle à cette vitesse de déplacement de la jambe de train. Le premier capteur peut donc être un capteur de vitesse qui mesure la vitesse de déplacement de la jambe de train en tant que telle ou d'un élément mobile avec la jambe de train, ou un accéléromètre qui mesure une accélération de la jambe de train en tant que telle ou d'un élément mobile avec la jambe de train qui par intégration permet au calculateur d'obtenir la vitesse de déplacement éventuellement souhaitée ou encore un capteur de position qui mesure une position de la jambe de train en tant que telle ou d'un élément mobile avec la jambe de train qui par dérivation permet d'obtenir la vitesse de déplacement éventuellement exploitée.

Le premier capteur mesure donc une information qui varie lors du déplacement de la jambe de train et qui permet au calculateur d'en déduire au moins une information de déplacement et par exemple une vitesse de déplacement. Par exemple, cette information peut prendre la forme d'un premier signal électrique présentant une tension électrique qui varie lorsque la vitesse de déplacement ou la position ou l'accélération de la jambe de train varie ou encore d'un premier signal de vitesse numérique porteur d'une valeur égale ou proportionnelle à la vitesse de déplacement ou à la position ou à une accélération de la jambe de train...

Le premier capteur émet donc un premier signal qui varie en fonction du déplacement relatif de la jambe de train par rapport à la structure porteuse. Le calculateur détecte ce mouvement relatif en traitant le premier signal pour obtenir, par exemple, au moins la vitesse de rotation de la jambe de train et pour commander le moteur.

Selon un aspect, la jambe de train peut comporter un amortisseur à gaz.

Selon un aspect, la jambe de train peut être dépourvue d'un amortisseur, le moteur remplissant cette fonction.

Indépendamment de la réalisation, le moteur peut être relié mécaniquement au système de transformation d'un mouvement au moins par un réducteur mécanique de vitesse de rotation muni d'une roue dentée de sortie, la roue dentée de sortie étant reliée au premier élément du système de transformation d'un mouvement ou formant le premier élément, la roue dentée de sortie étant mobile en rotation autour de l'axe de rotation de sortie.

Le réducteur mécanique peut comprendre un ou plusieurs étages de réduction de vitesse de rotation et de couple dit plus simplement « étage de réduction de vitesse de rotation » pour optimiser le moteur à utiliser.

A titre d'exemple, sur un aéronef de 7500 kilogrammes ayant une vitesse de descente de 2 mètres par seconde, l'utilisation de deux réducteurs fournissant chacun un rapport de réduction de 10 peut permettre d'utiliser un moteur fournissant une puissance de l'ordre de 40 à 50 kilowatts. Un tel moteur peut alors présenter une masse et un encombrement raisonnables.

Selon une possibilité, l'atterrisseur peut comporter un pignon de mesure en prise sur un élément en rotation mécaniquement relié à la jambe de train, tel que par exemple ladite roue dentée de sortie en présence d'un réducteur de vitesse de rotation, ledit premier capteur mesurant une vitesse de rotation ou une position ou une accélération dudit pignon de mesure. Eventuellement mais non obligatoirement, ledit pignon de mesure peut avoir un nombre de dents inférieur à un nombre de dents dudit élément en rotation pour améliorer la précision de la mesure.

Un faible déplacement de la jambe de train peut alors générer une rotation importante du pignon de mesure qui facilite la mesure précitée. Le premier signal est alors porteur par exemple de la vitesse de déplacement de la jambe de train. Dès lors, le premier signal fournit bien une information représentant une information de déplacement de la jambe de train.

Selon un aspect, ledit organe mobile du moteur peut comporter un pignon moteur engrenant une roue d'entrée de réduction de vitesse dudit réducteur mécanique de vitesse de rotation.

La roue d'entrée de réduction de vitesse présente un nombre de dents supérieur à un nombre de dents du pignon moteur. La roue d'entrée de réduction de vitesse et le pignon moteur forment conjointement un étage de réduction de vitesse de rotation.

Eventuellement, la roue d'entrée de réduction de vitesse est solidaire en rotation autour d'un axe intermédiaire d'un pignon de liaison, ledit axe intermédiaire étant parallèle à l'axe moteur, ledit pignon de liaison engrenant une roue dentée de sortie pour former un deuxième étage de réduction de vitesse, ledit pignon de liaison ayant un nombre de dents inférieur à un nombre de dents de la roue dentée de sortie.

Par ailleurs, le calculateur peut commander le moteur en fonction d'une composante elle même fonction de la position de la jambe de train pour compenser l'absence d'amortisseur. Cette composante dite d'absorption, habituellement assurée par la compression d'un gaz sur un atterrisseur classique, peut aussi prendre en compte les paramètres ajustables précités.

Selon un aspect, le calculateur peut être configuré pour contrôler ledit moteur en fonction au moins d'une information de déplacement relative à une vitesse de déplacement établie à partir du premier signal et d'une position courante de la jambe de train qui est établie à partir du premier signal ou d'un deuxième signal transmis par un deuxième capteur de l'atterrisseur, le deuxième capteur étant en communication avec ledit calculateur.

Eventuellement, l'atterrisseur comporte un premier capteur de type capteur de position, le calculateur utilisant le premier signal pour obtenir la position requise et dérivant le premier signal pour obtenir de plus la vitesse de déplacement requise. Alternativement, le premier capteur peut aussi être dans ce cas un capteur de vitesse ou un accéléromètre.

Selon un autre exemple, l'atterrisseur comporte au moins un premier capteur pour déterminer la vitesse de déplacement de la jambe de train et au moins un deuxième capteur pour déterminer la position de la jambe de train.

Le deuxième capteur est alors un capteur qui mesure une information variant lorsque la jambe de train se déplace et donc en fonction de la position de la jambe de train par rapport à une référence, par exemple la position train rentré ou train sorti de la jambe de train. Le deuxième capteur peut par exemple mesurer le nombre de tours effectués par un élément mobile avec la jambe de train. Un tel élément mobile peut par exemple inclure le pignon de mesure précité. Le deuxième capteur peut aussi mesurer une accélération ou une vitesse de rotation permettant d'obtenir une position par intégration.

Selon un aspect, le calculateur pouvant appliquer une loi d'effort pour contrôler ledit moteur, ledit calculateur peut mémoriser une unique loi d'effort munie d'au moins un coefficient ayant une valeur fonction de ladite information de déplacement et par exemple d'une vitesse de déplacement ou une unique loi d'effort munie d'au moins un coefficient ayant une valeur fonction de ladite information de déplacement, par exemple du type vitesse de déplacement, et un coefficient à valeur réglable ou une pluralité de lois d'effort munies chacune d'au moins un coefficient ayant une valeur fonction de ladite information de déplacement ,par exemple du type vitesse de déplacement. Au moins un coefficient à valeur réglable peut être relatif à un des paramètres de réglage précités. En fonction de la variante, au moins une desdites lois d'effort peut comprendre un coefficient ayant une valeur fonction de la position de la jambe de train voire un coefficient relatif à une commande de pas collectif d'un rotor principal pour éviter les surcharges ou les rebonds.

Par exemple, le calculateur mémorise plusieurs lois dans une mémoire, chaque loi correspondant à des conditions particulières (vitesse de descente, température extérieure, masse de l'aéronef...) et/ou comprenant des paramètres prédéfinis lui permettant de calculer et d'appliquer à chaque instant une loi adaptée à chaque condition d'utilisation de l'appareil. Le calculateur utilise alors la loi correspondant aux conditions courantes lors d'un atterrissage pour contrôler le moteur.

Selon un autre exemple, une unique loi peut comprendre des paramètres ayant chacun une valeur qui varie en fonction des conditions particulières précitées.

Selon un aspect, l'atterrisseur peut comporter un frein configuré pour immobiliser la jambe de train.

Selon un exemple donné pour illustrer un tel frein, le frein peut être un frein par manque de courant muni de cannelures de freinage. Ces cannelures peuvent être en prise avec des cannelures d'un organe solidaire en rotation du premier élément du système de transformation du mouvement lorsque le frein n'est pas alimenté électriquement pour immobiliser la jambe de train.

Selon un aspect, le moteur peut être un moteur électrique asynchrone.

Le premier élément et le deuxième élément peuvent prendre diverses formes. Selon un exemple, le premier élément et le deuxième élément comprennent une roue dentée et une crémaillère.

Selon un aspect, le premier élément peut comporter une manivelle.

La manivelle peut être mobile en rotation

Selon un aspect, ledit premier élément peut comporter une encoche décrivant un secteur angulaire ouvert.

Selon un aspect, le premier élément peut avoir une forme de disque

Selon un aspect, ledit premier élément peut être mobile en rotation.

Selon un aspect, ladite jambe de train peut coulisser le long d'un guide, par exemple du type d'un cylindre, le guide étant mobile en rotation, un bord du premier élément étant configuré pour entrainer une rotation du guide par interférence avec une butée du guide, notamment entre deux positions angulaires particulières du premier élément.

Une rotation du premier élément peut alors entraîner successivement une translation de la jambe de train par rapport au guide puis une rotation conjointe du guide et de la jambe de train.

Selon un aspect, l'atterrisseur peut comprendre une tige en liaison glissière avec le guide, ladite tige ayant une longueur constante et étant éventuellement configurée pour être mobile en rotation par rapport à une structure porteuse d'un aéronef. Par exemple, ledit guide peut comporter une glissière et un coulisseau coulissant le long de la glissière, la tige étant articulée au coulisseau autour d'un axe de basculement autour duquel le guide peut basculer par rapport à la tige.

Selon un aspect, ladite jambe de train peut être articulée à deux bras parallèles l'un à l'autre et mobiles en rotation autour respectivement de deux axes de rotation. Les deux bras forment un parallélogramme déformable guidant la jambe de train.

Selon cet exemple, l'atterrisseur peut être dépourvu de guide, le mouvement de la jambe de train étant guidé par les bras.

Par ailleurs, l'invention vise un aéronef muni d'une structure porteuse, par exemple un avion ou un giravion et éventuellement un hélicoptère. Cet aéronef comporte un atterrisseur du type de l'invention.

L'invention et ses avantages apparaîtront avec plus de détails dans le cadre de la description qui suit avec des exemples donnés à titre illustratif en référence aux figures annexées qui représentent :
[Fig 1] la figure 1, un dessin illustrant schématiquement un atterrisseur selon l'invention muni d'un premier élément en forme de disque,
[Fig 2] la figure 2, un dessin illustrant schématiquement un atterrisseur selon l'invention muni d'un premier élément en forme de disque et d'un réducteur de vitesse de rotation,
[Fig 3] la figure 3, un dessin illustrant schématiquement un atterrisseur selon l'invention muni d'un premier élément en forme de manivelle dans une position déployée,
[Fig 4] la figure 4, un dessin illustrant schématiquement un atterrisseur selon la figure 3 dans une position escamotée,
[Fig 5] la figure 5, un dessin illustrant schématiquement un atterrisseur basculant selon l'invention muni d'un premier élément en forme de disque et dans une position déployée,
[Fig 6] la figure 6, un dessin illustrant schématiquement un atterrisseur basculant selon la figure 5 dans une position escamotée,
[Fig 7] la figure 7, un dessin illustrant schématiquement un atterrisseur selon l'invention muni de bras de guidage,
[Fig 8] la figure 8, un dessin illustrant schématiquement un atterrisseur selon la figure 7 dans une position déployée, et
[Fig 9] la figure 9, un dessin illustrant schématiquement un atterrisseur selon la figure 7 dans une position escamotée.

Les éléments présents dans plusieurs figures distinctes sont affectés d'une seule et même référence.

Les figures illustrent diverses réalisations d'atterrisseurs selon l'invention données à titre d'exemple.

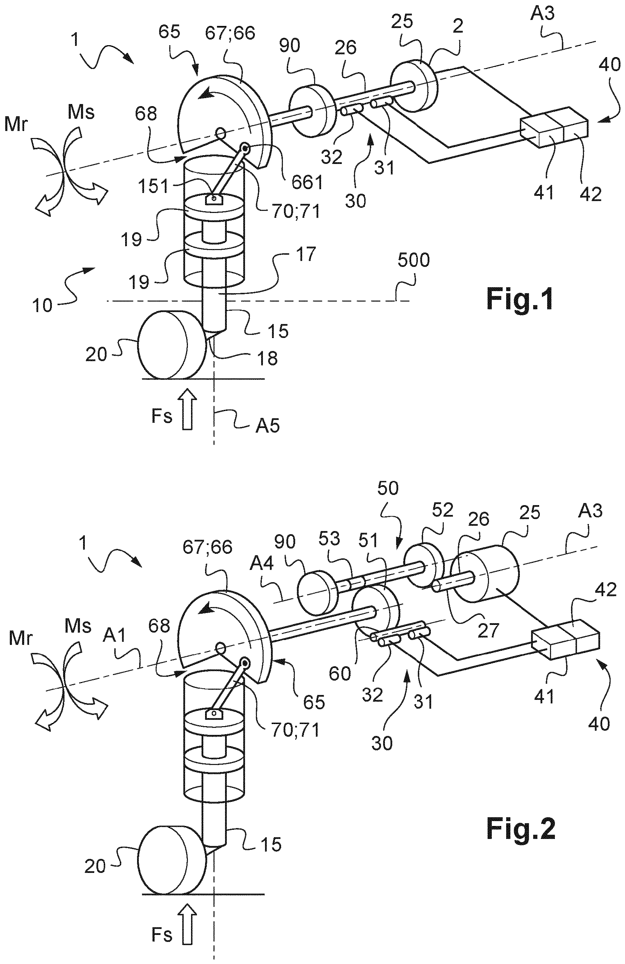

Indépendamment de la réalisation et en référence par exemple à la figure 1, un tel atterrisseur 10 peut être agencé sur un aéronef 1. Les éléments de l'aéronef n'ayant pas trait à l'atterrisseur 10 ne sont pas représentés pour ne pas alourdir la figure 1.

L'atterrisseur 10 peut être escamoté au moins partiellement en vol dans un espace 500. Cet espace 500 peut être au moins partiellement caréné et peut par exemple être un espace d'une case de train ou équivalent de l'aéronef 1.

L'atterrisseur 10 comporte une jambe de train 15. La jambe de train 15 est mobile par rapport à une structure porteuse 2 de l'aéronef 1 de manière à être mobile en translation par rapport à la structure porteuse 2, ou mobile en translation et en rotation par rapport à la structure porteuse 2 voire oscillante autour d'un axe de rétraction et de sortie. En outre, la jambe de train 15 porte au moins un organe 20 de contact avec le sol. Selon l'exemple de la figure 1, la jambe de train 15 porte un unique organe 20 de contact avec le sol de type roue.

La jambe de train 15 présente au moins un voire un unique degré de liberté par rapport à la structure porteuse 2. La jambe de train 15 peut se déplacer entre deux positions extrémales. Une première position extrémale est dénommée « position train rentré » par commodité et représente la position dans laquelle la jambe de train se trouve lorsque l'atterrisseur 10 et notamment l'organe 20 de contact avec le sol est escamoté au maximum dans l'espace 500 d'escamotage. Une deuxième position extrémale est dénommée « position train sorti » par commodité et représente la position dans laquelle la jambe de train se trouve lorsque l'atterrisseur 10 et notamment l'organe 20 de contact avec le sol est au maximum sortie de l'espace 500. Eventuellement, une position intermédiaire dite « position train semi-rentré » par commodité peut être mémorisée, l'atterrisseur 10 et par exemple l'organe 20 de contact avec le sol se trouvant partiellement dans l'espace 500 lorsque la position train semi-rentré est atteinte. La jambe de train 15 est susceptible d'atteindre toutes les positions possibles entre la position train sorti illustrée sur la figure 1 et la position train rentrée.

Selon un aspect, la jambe de train 15 peut s'étendre longitudinalement selon une direction A5. Cette direction A5 peut être établie pour être sensiblement perpendiculaire au sol selon l'exemple de la figure 1 et dans le cadre d'un atterrisseur droit ou à sonnette non rétracté.

Par ailleurs, la jambe de train 15 peut comprendre par exemple un tube ou plusieurs tubes, creux ou pleins, solidarisés les uns aux autres.

Par exemple, la jambe de train 15 peut comprendre un arrangement intermédiaire muni d'un tube 17 ou de plusieurs tubes. Ce tube 17 ou ces tubes peuvent s'étendre selon la direction A5. Selon un aspect, la jambe de train 15 peut comprendre un arrangement de liaison portant l'organe 20 de contact avec le sol. Selon l'illustration de la figure 1, L'arrangement de liaison peut comprendre une fusée de roue 18 solidaire de l'arrangement intermédiaire.

Selon un aspect, la jambe de train 15 peut être dépourvue d'amortisseur. Eventuellement, la jambe de train 15 peut être dépourvue d'un ou plusieurs tubes mobiles par rapport à d'autres tubes.

Par ailleurs, l'atterrisseur 10 possède un moteur 25 éventuellement électrique. Par exemple mais non exclusivement, le moteur 25 est un moteur électrique asynchrone.

Le moteur 25 comporte un carter éventuellement fixé à la structure porteuse 2. Le moteur 25 est relié mécaniquement à la jambe de train 15 pour qu'un mouvement d'un organe mobile du moteur 25 génère un effort sur la jambe de train 15. Par exemple, le moteur 25 est un moteur rotatif pourvu d'un organe de sortie mobile par rapport à la structure porteuse 2 uniquement autour d'un axe moteur A3. Un tel organe de sortie peut par exemple comprendre un arbre de sortie 26 voire un pignon moteur porté par l'arbre de sortie 26.

Par exemple, le moteur 25 comporte un stator solidaire de la structure porteuse 2 et un rotor relié mécaniquement à l'arbre de sortie 26.

En outre, selon les figures 1 à 9 et plus particulièrement selon la figure 1, l'atterrisseur 10 est muni d'un système de transformation d'un mouvement 65 interposé mécaniquement entre le moteur 25 et la jambe de train 15 afin de transformer un mouvement rotatif induit par le moteur 25 en un mouvement d'un autre genre et par exemple en un mouvement au moins de translation. A cet effet, le système de transformation d'un mouvement 65 comporte un premier élément 66 mobile, par exemple en rotation, coopérant avec un deuxième élément 70 mobile. Le premier élément 66 est de plus relié mécaniquement à l'organe de sortie 26, le deuxième élément 70 étant lui relié à la jambe de train 15. Par exemple, le premier élément 66 est articulé au deuxième élément 70 éventuellement via une liaison de type pivot ou rotule, ce deuxième élément 70 étant articulé à la jambe de train 15 éventuellement via une liaison de type pivot ou rotule.

Selon un autre aspect et selon l'exemple de la figure 1, le moteur 25 peut être relié directement au système de transformation d'un mouvement 65 par un connecteur mécanique usuel, par exemple via des vis liant une bride d'un organe rotatif du moteur à un organe du système de transformation d'un mouvement 65.

Alternativement et conformément à notamment l'illustration schématique de la figure 2, le moteur 25 peut être relié au système de transformation d'un mouvement 65 par un réducteur de vitesse de rotation 50 pourvu d'un ou plusieurs étages de réduction de vitesse de rotation. Ce réducteur de vitesse de rotation 50 est ainsi muni d'une roue dentée de sortie 51. Selon une première possibilité la roue dentée de sortie 51 est reliée au premier élément 66 du système de transformation d'un mouvement 65 par exemple par un arbre ou équivalent. Selon une deuxième possibilité non illustrée le premier élément 66 comporte la roue dentée de sortie 51, le deuxième élément 70 étant articulé directement à cette roue dentée de sortie 51.

Selon un exemple à un seul étage de réduction de vitesse de rotation, le moteur 25 peut comprendre un arbre rotatif 26 portant un pignon moteur 27 mobile en rotation autour d'un axe moteur A3. Dès lors, ce pignon moteur 27 de l'organe de sortie du moteur 25 engrène la roue dentée de sortie 51.

Selon l'exemple illustré sur la figure 2 à deux étages de réduction de vitesse de rotation, le pignon moteur 27 comprend des dents qui engrènent des dents d'une roue de réduction 52. La roue de réduction 52 présente un nombre de dents supérieur à un nombre de dents du pignon moteur 27. En outre, la roue de réduction 52 est solidaire en rotation autour d'un axe intermédiaire A4 d'un pignon de liaison 53. Cet axe intermédiaire A4 est parallèle à l'axe moteur A3 selon l'exemple représenté mais peut être orienté différemment pour répondre à d'autres architectures de boîtes de transmission de puissance. Dès lors, le pignon de liaison 53 comprend des dents qui engrènent des dents de la roue dentée de sortie 51, le pignon de liaison 53 ayant un nombre de dents inférieur à un nombre de dents de la roue dentée de sortie 51.

Selon d'autres réalisations, le réducteur de vitesse de rotation peut comprendre plus de deux étages de réduction de vitesse.

Selon un autre aspect, l'atterrisseur 10 est muni d'un ensemble de mesure 30 mesurant des valeurs de paramètres de l'atterrisseur 10.

Cet ensemble de mesure 30 comprend a minima un ou par sécurité plusieurs premiers capteurs 31. Chaque premier capteur 31 mesure une information de déplacement permettant d'obtenir par exemple la vitesse de déplacement de la jambe de train 15 voire la position de la jambe de train 15, directement ou indirectement en surveillant un organe de la jambe de train 15 ou en surveillant un organe mobile en déplacement conjointement avec la jambe de train 15. Par exemple, le premier capteur 31 est un capteur connu sous l'acronyme RVDT. Un premier capteur 31 peut prendre la forme d'un capteur de vitesse ou d'un capteur de position permettant d'obtenir une vitesse par dérivation ou un accéléromètre permettant d'obtenir une vitesse par intégration.

Cet ensemble de mesure 30 peut comprendre au moins un deuxième capteur 32 qui mesure une information de déplacement permettant d'obtenir par exemple la position de la jambe de train 15 par rapport à une référence, directement ou indirectement en surveillant un organe de la jambe de train 15 ou en surveillant un organe mobile conjointement avec la jambe de train 15. Par exemple, le deuxième capteur 32 est un capteur connu sous l'acronyme RVDT.

Un deuxième capteur 32 peut par exemple prendre la forme d'un capteur de vitesse permettant d'obtenir une position par intégration ou d'un capteur de position ou d'un accéléromètre permettant d'obtenir une position par double intégration.

Selon l'exemple de la figure 1, un premier capteur 31 de type capteur de vitesse et un deuxième capteur 32 de type capteur de position mesurent respectivement une vitesse de rotation et une position d'un arbre liant le moteur 25 au premier élément 66.

Selon un exemple, au moins le premier capteur 31 voire le deuxième capteur 32 mesure une information relative à un pignon de mesure 60.

Eventuellement et selon l'exemple de la figure 2, un pignon de mesure 60 inclut des dents engrenées par des dents de la roue dentée de sortie 51 pour former un engrenage multiplicateur de vitesse de rotation. Le pignon de mesure 60 a alors un nombre de dents inférieur au nombre de dents de la roue dentée de sortie 51.

Dès lors, le premier capteur 31 peut être un capteur de vitesse mesurant une vitesse de rotation de ce pignon de mesure 60 et/ou le deuxième capteur 32 peut être un capteur position mesurant une position de ce pignon de mesure 60. Alternativement, le premier capteur 31 peut par exemple mesurer une position de ce pignon de mesure 60 ou une accélération de ce pignon de mesure 60 et/ou le deuxième capteur 32 peut par exemple mesurer une vitesse de rotation de ce pignon de mesure 60 ou une accélération de ce pignon de mesure 60.

Selon un autre aspect, l'atterrisseur 10 comprend un calculateur 40. Le calculateur 40 peut comprendre par exemple au moins un processeur 41 et au moins une mémoire 42, au moins un circuit intégré, au moins un système programmable, au moins un circuit logique, ces exemples ne limitant pas la portée donnée à l'expression « calculateur ». Le calculateur 40 peut être un calculateur dédié ou un calculateur de l'aéronef 1 ayant de multiples fonctions. Le calculateur 40 peut être déporté par rapport au reste de l'atterrisseur 40.

Le calculateur 40 est en communication via des liaisons filaires ou non filaires avec le moteur 25 et chaque capteur de l'ensemble de mesure 30, à savoir avec chaque premier capteur 31 et le cas échéant avec chaque deuxième capteur 32. En présence de plusieurs capteurs mesurant une même information, le calculateur 40 peut déterminer cette information par des méthodes usuelles. Dès lors, le calculateur 40 est configuré pour contrôler le moteur 25 afin de piloter une position de l'organe 20 de contact avec le sol, par exemple par rapport à la structure porteuse 2. Le calculateur peut être configuré pour contrôler le moteur 25 en fonction au moins d'une information de déplacement, plus particulièrement en fonction d'une vitesse de déplacement de la jambe de train 15 déduite du premier signal transmis par le premier capteur 31 et/ou éventuellement d'une position de la jambe de train déduite du premier signal ou le cas échéant d'un deuxième signal transmis par le deuxième capteur 32.

Lorsque l'aéronef 1 est sur le point d'atterrir, le calculateur 40 transmet un signal au moteur 25, par exemple pour placer l'atterrisseur 10 dans la position train sorti. Par exemple, cette étape est requise sur ordre d'un pilote via un bouton relié au calculateur 40 par des liaisons filaires ou non filaires ou tout autre dispositif de contrôle.

Lorsque l'organe 20 de contact avec le sol touche le sol, le sol exerce un effort Fs sur l'organe 20 de contact traduit en un couple Ms tendant à faire tourner le premier élément. Le calculateur 40 sollicite le moteur 25 par exemple pour amortir la descente de la structure porteuse 2 vers le sol en contrôlant le déplacement de la jambe de train 15 vers l'espace 500 en induisant un couple Mr, opposé au couple Ms.

A cet effet, le calculateur 40 peut commander le moteur 25 pour appliquer une loi d'effort pouvant être directement mémorisée dans le calculateur 40 et éventuellement paramétrable en utilisation en direct pour que le moteur 25 applique une loi adaptée à la situation courante. Cette loi d'effort peut être mémorisée sous la forme d'une ou plusieurs lignes de code, d'un ou plusieurs composants logiques d'un circuit tels qu'un sommateur, un soustracteur...

Diverses options de contrôle sont envisageables et par exemple les options suivantes.

Selon une première option, le calculateur 40 mémorise une unique loi d'effort munie d'au moins un coefficient ayant une valeur fonction de la vitesse de déplacement mesurée et/ou calculée.

Selon une deuxième option, le calculateur 40 mémorise une unique loi d'effort munie d'au moins un coefficient ayant une valeur fonction de la vitesse de déplacement et un coefficient à valeur réglable en fonction par exemple de la position mesurée, de la masse de l'aéronef 1, du centrage de l'aéronef 1, des conditions d'atterrissage, de la température à l'extérieur de l'aéronef 1, d'une garde au sol à atteindre...

Selon une troisième option, le calculateur 40 mémorise une pluralité de lois d'effort d'un des types précédents et donc munies chacune d'au moins un coefficient ayant une valeur fonction de la vitesse de déplacement et éventuellement un coefficient à valeur réglable en fonction par exemple de la position mesurée. Une même composante peut être relative à une valeur fonction de la vitesse de déplacement et à une autre valeur réglable. Par exemple, le calculateur 40 peut utiliser une loi parmi un ensemble de lois, chaque loi étant fonction d'une valeur particulière d'un paramètre tel que par exemple un paramètre relatif à la masse de l'aéronef 1, au centrage de l'aéronef 1, aux conditions d'atterrissage, à la température à l'extérieur de l'aéronef 1, à une garde au sol à atteindre.

Au moins une loi peut aussi être utilisée pour solliciter le moteur 25 afin d'escamoter l'atterrisseur 20 dans l'espace 500.

Selon un autre aspect, l'atterrisseur 10 peut comporter un frein 90 configuré pour immobiliser en rotation la jambe de train 15.

Par exemple, le frein 90 est un frein électrique à manque de courant. Le frein 90 comporte alors un organe de blocage, tel que par exemple un disque ou un doigt muni de cannelures, qui se déplace en l'absence d'un courant électrique pour bloquer par interférence de forme la jambe de train 15. Le frein 90 peut bloquer la jambe de train 15 en tant que telle ou un organe mobile conjointement avec la jambe de train 15. En cas de coupure de courant électrique anormale ou sur ordre d'un pilote par exemple, le frein 90 immobilise alors la jambe de train 15, par exemple dans la position train sorti.

Selon un autre aspect et en référence par exemple à la figure 1, le deuxième élément 70 du système de transformation d'un mouvement 65 peut comporter une bielle 71.

Cette bielle 71 est articulée par une première articulation 661 au premier élément 66 et par une deuxième articulation 151 à la jambe de train 15. Par exemple la première articulation 661 est une liaison de type pivot ou à rotule et/ou la deuxième articulation 151 est une liaison de type pivot ou à rotule.

Selon l'exemple de la figure 1, le premier élément 66 peut comporter une encoche 68 formant un secteur angulaire ouvert entre deux bords de ce premier élément. Par exemple, le premier élément 66 peut avoir un disque 67 éventuellement muni d'une encoche 68 formant un secteur angulaire ouvert.

Dès lors, la bielle 71 est articulée au disque 67, par exemple entre le centre du disque 67 et la périphérie du disque 67. Le rayon séparant la bielle 71 de l'axe de rotation du premier élément 66 peut permettre de régler un débattement de la jambe de train 15. Par exemple, un rayon compris entre 150 et 210 millimètres peut être envisageable pour obtenir un débattement de la jambe de train 15 en translation de 280 millimètres, un rayon compris entre 160 et 230 millimètres peut être envisageable pour obtenir un débattement de la jambe de train 15 en translation de 300 millimètres, un rayon compris entre 80 et 120 millimètres peut être envisageable pour obtenir un débattement de la jambe de train 15 en translation de 150 millimètres. Ces chiffres sont cités à titre illustratif.

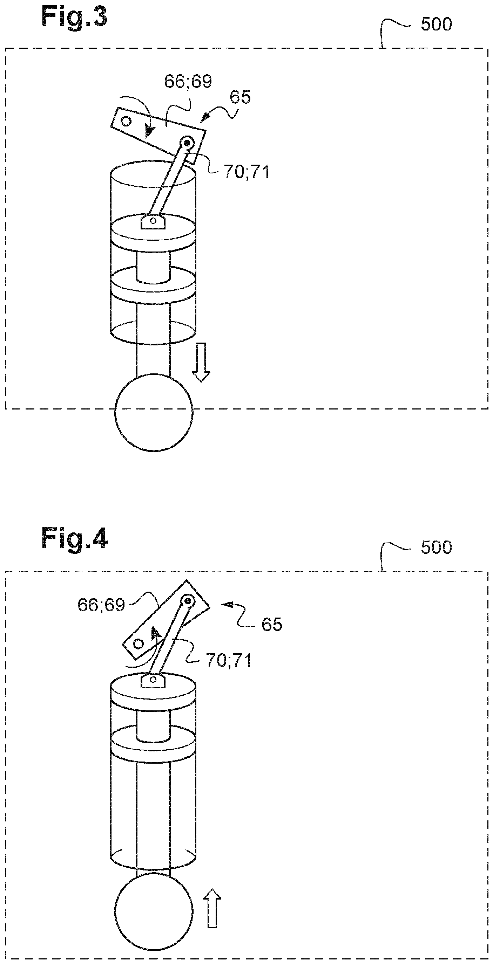

Selon les variantes des figures 3 et 4, le premier élément 66 peut comporter une manivelle 69, à savoir un lien allongé selon les variantes illustrées.

Indépendamment de la forme du premier élément 66, l'atterrisseur 10 peut comprendre un dispositif pour guider la jambe de train 15.

Selon la première réalisation des figures 1 à 6, la jambe de train 15 peut coulisser le long d'un guide 72. Par exemple, le guide 72 prend la forme d'un tube creux formant un caisson dans lequel coulisse au moins une partie de la jambe de train 15. Eventuellement, la jambe de train 15 comporte au moins un épaulement 19 formant un piston en appui contre une paroi interne du guide 72 et glissant le long du guide 72.

Le guide peut comprendre au moins une fente dans laquelle coulisse une partie de la jambe de train.

Selon une première alternative du premier mode de réalisation et les exemples des figures 1 à 4, le guide 72 peut être fixe et porté par la structure porteuse 2. La jambe de train 15 est alors mobile uniquement en translation, le système de transformation d'un mouvement transformant un mouvement rotatif initié par le moteur 25 en un mouvement translatif transmis à la jambe de train 15 et inversement.

En particulier, la figure 1 illustre un atterrisseur 10 dépourvu de réducteur de vitesse de rotation, l'atterrisseur 10 étant muni d'un premier élément 66 en forme de disque et d'une jambe de train 15 coulissant dans un guide 72 immobile.

La figure 2 illustre un atterrisseur 10 pourvu d'un réducteur de vitesse de rotation 50, d'un premier élément 66 en forme de disque et d'une jambe de train 15 coulissant dans un guide 72 immobile.

Les figures 3 et 4 illustrent un atterrisseur 10 pourvu ou dépourvu d'un réducteur de vitesse de rotation 50, cet atterrisseur 10 étant muni d'un premier élément 66 en forme de manivelle 69 et d'une jambe de train 15 coulissant dans un guide 72 immobile. L'atterrisseur est sur la figure 3 dans une position déployée, à savoir distincte de la position train rentré, et dans une position escamotée à savoir train rentré sur la figure 4.

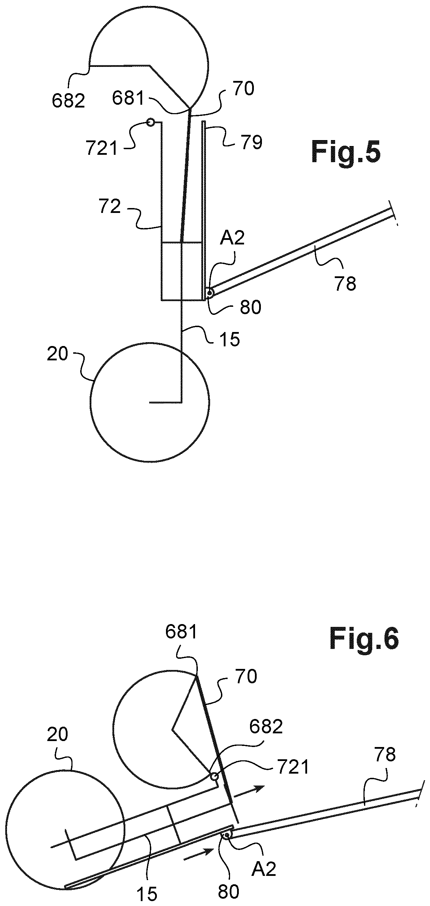

Néanmoins, selon une deuxième alternative du premier mode de réalisation et les exemples des figures 5 et 6, le guide 72 peut être mobile en rotation par rapport à une structure porteuse 2 de l'aéronef. La jambe de train 15 est alors mobile en translation par rapport au guide 72 et en rotation conjointement avec le guide 72, le système de transformation d'un mouvement 65 transformant un mouvement rotatif initié par le moteur 25 en un mouvement translatif et rotatif transmis à la jambe de train 15 et inversement.

Selon l'exemple de la figure 5, le premier élément peut comporter un premier bord 681 et un deuxième bord 682 disposés l'un vis-à-vis de l'autre circonférentiellement et de part et d'autre d'une zone ouverte. Le deuxième élément 70 est par exemple articulé au premier élément à proximité du premier bord 681. Le guide 72 peut comprendre une butée 721 agencée dans la zone ouverte.

De plus, le guide 72 peut être en liaison glissière avec une tige 78. Cette tige peut s'étendre longitudinalement d'une extrémité distale à une extrémité proximale. La tige peut être rigide à peut avoir une longueur fixe longitudinalement. L'extrémité distale peut être articulée à la structure porteuse, par un pivot ou une rotule par exemple, afin de conférer au moins un degré de liberté en rotation à la tige 78 par rapport à la structure poreuse.

Eventuellement, la liaison glissière comporte une glissière 79 le long de laquelle glisse un coulisseau 80. La glissière 79 peut prendre la forme d'un rail ou d'une fente par exemple. Dès lors, le coulisseau 80 est articulé autour d'un axe de basculement A2 à l'extrémité proximale de la tige 78, par exemple via une liaison de type pivot.

Dès lors, un mouvement rotatif du premier élément 70 selon un sens entraine une translation de la jambe de train 15 dans le guide 72. De plus et en référence à la figure 6, lorsque le deuxième bord 682 entre en contact avec la butée du guide, le premier élément entraîne un basculement conjoint du guide 72 et de la jambe de train 15 en poursuivant sa rotation selon ledit sens.

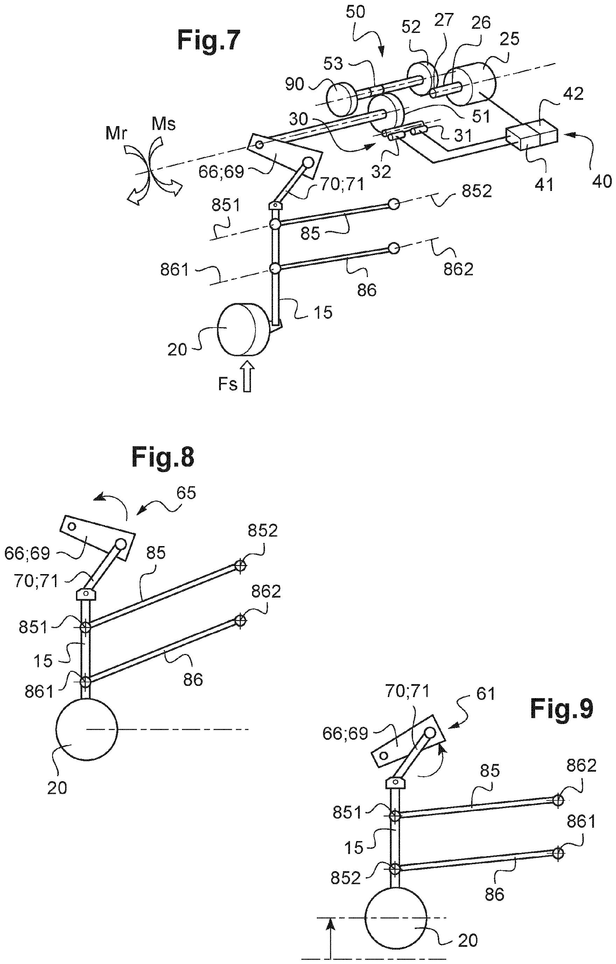

Selon le deuxième mode de réalisation des figures 7 à 9, la jambe de train 15 est articulée à deux bras 85, 86 parallèles l'un à l'autre respectivement autour de deux axes de rotation 851, 861. Les deux bras 85, 86 sont de plus mobiles en rotation autour respectivement de deux axes de rotation 852, 862 par rapport à la structure porteuse 2 pour conférer un mouvement de translation circulaire à la jambe de train 15.

Cette deuxième réalisation présente l'avantage de s'affranchir d'efforts de frottement entre la jambe de train 15 et un caisson de guidage ce qui peut tendre à optimiser le contrôle de la jambe de train 15.

Eventuellement, le moteur 25 et/ou au moins un organe d'un système de réduction de vitesse 50 peuvent être portés par au moins un bras 85, 86.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Atterrisseur (10) muni d'une jambe de train (15) mobile, ladite jambe de train (15) portant au moins un organe (20) de contact avec le sol, ledit atterrisseur (10) comporte un moteur (25) ayant un organe de sortie (26) mobile en rotation autour d'un axe moteur (A3), ledit atterrisseur (10) ayant un système de transformation d'un mouvement (65), ledit système de transformation d'un mouvement (65) ayant un premier élément (66) mobile coopérant avec un deuxième élément (70) mobile, le premier élément (66) étant relié mécaniquement à l'organe de sortie (26) où le deuxième élément (70) est attaché à la jambe de train (15), ledit deuxième élément (70) comporte une bielle (71) articulée par une première articulation (661) au premier élément (66), ladite bielle (71) étant articulée par une deuxième articulation (151) à la jambe de train (15)ledit atterrisseur (10) comprenant un calculateur (40) en communication avec ledit moteur (25), ledit calculateur (40) étant configuré pour contrôler ledit moteur (25) afin de piloter une position de l'organe (20) de contact avec le sol, **caractérisé en ce que** ledit système de transformation d'un mouvement (65) est configuré pour transformer un mouvement rotatif par le moteur en un mouvement translatif de la jambe de train ou en un mouvement translatif et rotatif de la jambe de train ou en un mouvement de translation circulaire de la jambe de train.

2. Atterrisseur selon la revendication 1, comprenant un premier capteur (31), ledit calculateur (40) est configuré pour contrôler ledit moteur (25) en fonction au moins d'une information de déplacement de la jambe de train (15) établie à partir d'un premier signal transmis par 2. le premier capteur (31) de l'atterrisseur en communication avec le calculateur (40).

3. Atterrisseur selon l'une quelconque des revendications 1 à 2, où le moteur (25) est relié mécaniquement au système de transformation d'un mouvement (65) au moins par un réducteur mécanique (50) de vitesse de rotation muni d'une roue dentée de sortie (51) reliée au premier élément (66) du système de transformation d'un mouvement (65) ou formant ledit premier élément (66), ladite roue dentée de sortie (51) étant mobile en rotation autour d'un axe de rotation de sortie (A1).

4. Atterrisseur selon la revendication 2, où ledit atterrisseur (10) comporte un pignon de mesure (60) en prise sur un élément en rotation mécaniquement relié à la jambe de train (15), ledit premier capteur (31) mesurant une vitesse de rotation ou une position ou une accélération dudit pignon de mesure (60).

5. Atterrisseur selon les revendications 3 et 4, où ledit pignon de mesure (60) est en prise avec ladite roue dentée de sortie (51).

6. Atterrisseur selon la revendication 3, où ledit organe de sortie (26) mobile comporte un pignon moteur (27) engrenant une roue d'entrée de réduction de vitesse (52) dudit réducteur mécanique (50) de vitesse de rotation.

7. Atterrisseur selon la revendication 2, où ledit calculateur (40) est configuré pour contrôler ledit moteur (25) en fonction au moins de ladite information de déplacement qui est relative à une vitesse de déplacement établie à partir du premier signal et d'une position courante de la jambe de train (15) établie à partir du premier signal ou d'un deuxième signal transmis par un deuxième capteur (32) ) de l'atterrisseur en communication avec ledit calculateur (40).

8. Atterrisseur selon l'une quelconque des revendications 1 à 7, où ledit calculateur (40) est configuré pour commander ledit moteur (25) en appliquant une loi d'effort, ledit calculateur (40) mémorisant une unique loi d'effort munie d'au moins un coefficient ayant une valeur fonction de ladite information de déplacement ou une unique loi d'effort munie d'au moins un coefficient ayant une valeur fonction de ladite information de déplacement et un coefficient à valeur réglable ou une pluralité de lois d'effort munies chacune d'au moins un coefficient ayant une valeur fonction de ladite information de déplacement.

9. Atterrisseur selon l'une quelconque des revendications 1 à 8, où ledit atterrisseur (10) comporte un frein (90) configuré pour immobiliser la jambe de train (15).

10. Atterrisseur selon l'une quelconque des revendications 1 à 9, où ledit premier élément (66) comporte une manivelle (69).

11. Atterrisseur selon l'une quelconque des revendications 1 à 9, où ledit premier élément (66) comporte un disque (67) présentant une encoche (68) qui forme un secteur angulaire ouvert entre deux bords (681, 682).

12. Atterrisseur selon l'une quelconque des revendications 1 à 11, où ladite jambe de train (15) coulisse le long d'un guide (72), le guide (72) étant mobile en rotation, un bord du premier élément étant configuré pour entrainer une rotation du guide par interférence avec une butée du guide.

13. Atterrisseur selon la revendication 12, où ledit atterrisseur (10) comprenant une tige en liaison glissière avec le guide (72), ladite tige ayant une longueur constante.

14. Atterrisseur selon l'une quelconque des revendications 1 à 11, où ladite jambe de train (15) est articulée à deux bras (85, 86) parallèles l'un à l'autre et mobiles en rotation autour respectivement de deux axes de rotation (852, 862).

15. Aéronef (1) muni d'une structure porteuse (2), où ledit aéronef (1) comporte un atterrisseur (10) selon l'une quelconque des revendications 1 à 14 relié à la structure porteuse (2).

## Patentansprüche

1. Landefahrwerk (10) mit einem beweglichen Fahrwerksbein (15), wobei das Fahrwerksbein (15) mindestens ein Bodenkontaktorgan (20) trägt, wobei das Landefahrwerk (10) einen Motor (25) mit einem um eine Motorachse (A3) drehbaren Abtriebsorgan (26) umfasst, wobei das Landefahrwerk (10) ein Bewegungsumwandlungssystem (65) aufweist, wobei das Bewegungsumwandlungssystem (65) ein erstes bewegliches Element (66) aufweist, das mit einem zweiten beweglichen Element (70) zusammenwirkt, das erste Element (66) mechanisch mit dem Abtriebsorgan (26) verbunden ist, das zweite Element (70) an dem Fahrwerksbein (15) befestigt ist, das zweite Element (70) eine Pleuelstange (71) umfasst, die über ein erstes Gelenk (661) an dem ersten Element (66) angelenkt ist, wobei die Pleuelstange (71) über ein zweites Gelenk (151) an dem Fahrwerksbein (15) angelenkt ist, wobei das Fahrwerk (10) einen Rechner (40) in Kommunikation mit dem Motor (25) umfasst, wobei der Rechner (40) konfiguriert ist, den Motor (25) zu betreiben, um eine Position des Bodenkontaktorgans (20) zu steuern,
**dadurch gekennzeichnet, dass** das Bewegungsumwandlungssystem (65) konfiguriert ist, um eine Drehbewegung durch den Motor in eine Translationsbewegung des Fahrwerksbeins oder in eine Translations- und Rotationsbewegung des Fahrwerksbeins oder in eine zirkulare Translationsbewegung des Fahrwerksbeins umzuwandeln.

2. Landefahrwerk nach Anspruch 1, mit einem ersten Sensor (31), wobei der Rechner (40) konfiguriert ist, um den Motor (25) in Abhängigkeit von mindestens einer Information über die Bewegung des Fahrwerksbeins (15) zu betreiben, die aus einem von dem ersten Sensor (31) des Fahrwerks in Kommunikation mit dem Rechner (40) übertragenen ersten Signal erstellt wird.

3. Landefahrwerk nach einem der Ansprüche 1 bis 2, bei dem der Motor (25) mit dem Bewegungsumwandlungssystem (65) zumindest über ein mechanisches Drehzahluntersetzungsgetriebe (50) mechanisch verbunden ist, das mit einem Abtriebszahnrad (51) versehen ist, das mit dem ersten Element (66) des Bewegungsumwandlungssystems (65) verbunden ist oder das erste Element (66) bildet, wobei das Abtriebszahnrad (51) um eine Abtriebsdrehachse (A1) drehbeweglich ist.

4. Landefahrwerk nach Anspruch 2, bei dem das Landefahrwerk (10) ein Messzahnrad (60) aufweist, das mit einem mechanisch mit dem Fahrwerksbein (15) verbundenen drehbaren Element in Eingriff steht, wobei der erste Sensor (31) eine Drehgeschwindigkeit oder eine Position oder eine Beschleunigung des Messzahnrads (60) misst.

5. Landefahrwerk nach den Ansprüchen 3 und 4, bei dem das Messzahnrad (60) mit dem Abtriebszahnrad (51) in Eingriff steht.

6. Landefahrwerk nach Anspruch 3, bei dem das bewegliche Abtriebsorgan (26) ein Antriebszahnrad (27) umfasst, das mit einem Eingangsrad zur Drehzahlreduzierung (52) des mechanischen Drehzahluntersetzungsgetriebes (50) kämmt.

7. Landefahrwerk nach Anspruch 2, wobei der Rechner (40) konfiguriert ist, um den Motor (25) in Abhängigkeit von mindestens der Bewegungsinformation zu steuern, die eine aus dem ersten Signal ermittelte Bewegungsgeschwindigkeit und eine aktuelle Position des Fahrwerksbeins (15) betrifft, die aus dem ersten Signal oder einem zweiten Signal, das von einem zweiten mit dem Rechner (40) in Verbindung stehenden Sensor (32) des Fahrwerks übertragen wird, ermittelt wird.

8. Landefahrwerk nach einem der Ansprüche 1 bis 7, wobei der Rechner (40) konfiguriert ist, den Motor (25) durch Anwendung einer Kraftregel zu steuern, wobei der Rechner (40) eine einzige Kraftregel mit mindestens einem Koeffizienten, dessen Wert eine Funktion der Bewegungsinformation ist, oder eine einzige Kraftregel mit mindestens einem Koeffizienten, dessen Wert eine Funktion der Bewegungsinformation ist, und einem Koeffizienten mit einstellbarem Wert, oder eine Mehrzahl von Kraftregeln speichert, von denen jede mindestens einen Koeffizienten mit einem Wert aufweist, der eine Funktion der Bewegungsinformation ist.

9. Landefahrwerk nach einem der Ansprüche 1 bis 8, bei dem das Fahrwerk (10) eine Bremse (90) aufweist, die konfiguriert ist, um das Fahrwerksbein (15) zu fixieren.

10. Landefahrwerk nach einem der Ansprüche 1 bis 9, bei dem das erste Element (66) eine Kurbel (69) umfasst.

11. Landefahrwerk nach einem der Ansprüche 1 bis 9, bei dem das erste Element (66) eine Scheibe (67) mit einer Kerbe (68) umfasst, die einen offenen Winkelsektor zwischen zwei Kanten (681, 682) bildet.

12. Landefahrwerk nach einem der Ansprüche 1 bis 11, bei dem das Fahrwerksbein (15) entlang einer Führung (72) gleitet, wobei die Führung (72) drehbar ist und eine Kante des ersten Elements konfiguriert ist, um durch Wechselwirken mit einem Anschlag der Führung eine Drehung der Führung zu bewirken.

13. Landefahrwerk nach Anspruch 12, wobei das Landefahrwerk (10) eine Stange umfasst, die gleitend mit der Führung (72) verbunden ist, wobei die Stange eine konstante Länge hat.

14. Landefahrwerk nach einem der Ansprüche 1 bis 11, bei dem das Fahrwerksbein (15) an zwei Armen (85, 86) angelenkt ist, die parallel zueinander verlaufen und jeweils um zwei Drehachsen (852, 862) drehbar sind.

15. Luftfahrzeug (1) mit einer Tragstruktur (2), wobei das Luftfahrzeug (1) ein mit der Tragstruktur (2) verbundenes Fahrwerk (10) nach einem der Ansprüche 1 bis 14 aufweist.

## Claims

1. Landing gear (10) provided with a movable gear leg (15), said gear leg (15) supporting at least one member (20) for contact with the ground, said landing gear (10) comprising a motor (25) having a output member (26) which is rotatable about a motor axis (A3), said landing gear (10) having a movement transformation system (65), said movement transformation system (65) having a movable first element (66) engaging with a movable second element (70), the first element (66) being mechanically connected to the output member (26), the second element (70) being attached to the gear leg (15), said second element (70) comprising a connecting rod (71) hinged by a first hinge (661) to the first element (66), said connecting rod (71) being hinged by a second hinge (151) to the gear leg (15), said landing gear (10) including a computer (40) in communication with said motor (25), said computer (40) being designed to control said motor (25) in order to control a position of the member (20) for contact with the ground, **characterised in that** the said movement transformation system (65) is designed to transform a rotational movement by the motor into a translational movement of the gear leg or into a translational and rotational movement of the gear leg or into a circular translational movement of the gear leg.

2. Landing gear according to claim 1,
including a first sensor (31), said computer (40) being designed to control said motor (25) on the basis of at least one item of displacement information of the gear leg (15), which information is obtained from a first signal transmitted by the first sensor (31) of the landing gear in communication with the computer (40).

3. Landing gear according to either claim 1 or claim 2,
wherein the motor (25) is mechanically connected to the movement transformation system (65) at least by a mechanical rotational speed reducer (50) provided with a toothed output wheel (51) that is connected to the first element (66) of the movement transformation system (65) or forms said first element (66), said toothed output wheel (51) being rotatable about an output axis of rotation (A1).

4. Landing gear according to claim 2,
wherein said landing gear (10) comprises a measuring pinion (60) engaged on a rotating element mechanically connected to the gear leg (15), said first sensor (31) measuring a rotational speed or a position or an acceleration of said measuring pinion (60).

5. Landing gear according to claims 3 and 4,
wherein said measuring pinion (60) meshes with said toothed output wheel (51).

6. Landing gear according to claim 3,
wherein said movable output member (26) comprises a motor pinion (27) meshing with a speed reduction input wheel (52) of said mechanical rotational speed reducer (50).

7. Landing gear according to claim 2,
wherein said computer (40) is designed to control said motor (25) on the basis at least of said displacement information which relates to a displacement speed obtained from the first signal and of a current position of the gear leg (15) obtained from the first signal or a second signal, which signals are transmitted by a second sensor (32) of the landing gear in communication with said computer (40).

8. Landing gear according to any of claims 1 to 7,
wherein said computer (40) is designed to control said motor (25) by applying a force law, said computer (40) storing a single force law provided with at least one coefficient having a value based on said displacement information, or a single force law provided with at least one coefficient having a value based on said displacement information and a coefficient having an adjustable value, or a plurality of force laws each provided with at least one coefficient having a value based on said displacement information.

9. Landing gear according to any of claims 1 to 8,
wherein said landing gear (10) includes a brake (90) designed to immobilize the gear leg (15).

10. Landing gear according to any of claims 1 to 9,
wherein said first member (66) includes a crank (69).

11. Landing gear according to any of claims 1 to 9,
wherein said first element (66) comprises a disc (67) having a notch (68) which forms an open angular sector between two edges (681, 682).

12. Landing gear according to any of claims 1 to 11,
wherein said gear leg (15) slides along a guide (72), the guide (72) being rotatable, an edge of the first element being designed to rotate the guide by coming into contact with an abutment of the guide.

13. Landing gear according to claim 12,
wherein said landing gear (10) includes a rod in sliding connection with the guide (72), said rod having a constant length.

14. Landing gear according to any of claims 1 to 11,
wherein said gear leg (15) is hinged to two arms (85, 86) which are parallel to each other and rotatable about two axes of rotation (852, 862), respectively.

15. Aircraft (1) provided with a supporting structure (2),
wherein said aircraft (1) comprises a landing gear (10) according to any of claims 1 to 14 connected to the support structure (2).
